Europäisches Patentamt

European Patent Office

Office européen des brevets

(11) Publication number: **0 462 602 A1**

(12) **EUROPEAN PATENT APPLICATION**

(21) Application number: 91110095.6

(22) Date of filing: **19.06.91**

(51) Int. Cl.⁵: **C04B 24/38**, C04B 28/02,
//(C04B28/02,14:08,14:38,24:22,
24:38,40:00)

(30) Priority: **19.06.90 JP 158573/90**
**19.06.90 JP 158574/90**
**20.06.90 JP 159621/90**
**22.06.90 JP 165379/90**
**22.06.90 JP 165378/90**
**29.06.90 JP 169744/90**
**03.07.90 JP 174598/90**
**02.07.90 JP 172814/90**

(43) Date of publication of application:
**27.12.91 Bulletin 91/52**

(84) Designated Contracting States:
**AT BE CH DE DK ES FR GB GR IT LI LU NL SE**

(71) Applicant: **TAISEI CORPORATION**
**25-1, Nishishinjuku 1-chome**
**Shinjuku-ku Tokyo 160(JP)**

Applicant: **TAKEDA CHEMICAL INDUSTRIES,
LTD.**
**3-6, Doshomachi 2-chome Chuo-ku
Osaka(JP)**

(72) Inventor: **Nara, Kiyoshi**
**53-12, Katsurainui-cho, Sakyo-ku
Kyoto(JP)**
Inventor: **Matsuoka, Yasunori**
**1-25-1, Nishishinjuku, Shinjuku-ku
Tokyo(JP)**
Inventor: **Shindoh, Takefumi**
**1-25-1, Nishishinjuku, Shinjuku-ku
Tokyo(JP)**
Inventor: **Sakamoto, Jun**
**1-25-1, Nishishinjuku, Shinjuku-ku
Tokyo(JP)**
Inventor: **Tangtermsirikul, Somnuk**
**1-25-1, Nishishinjuku, Shinjuku-ku
Tokyo(JP)**

(74) Representative: **Henkel, Feiler, Hänzel &
Partner**
**Möhlstrasse 37**
**W-8000 München 80(DE)**

(54) **Method of manufacture of concrete products from raw concrete.**

(57) A method for manufacture of concrete products is disclosed using concrete which contains cement, hardening materials, β-1,3-glucan and a superplasticizer.

BACKGROUND OF THE INVENTION

The present invention relate to a method for manufacturing concrete structures and concrete products (in the Specification, "products" will refer to both concrete structures and products) using raw concrete containing $\beta$-1,3-glucan which offers high fluidity, high filling capacity, and a high resistance to separation.

In order to obtain high fluidity, high filling properties in concrete, so-called "high performance concrete" has been developed, as described in the October 1989 issue of Doboku Seko (developed by Professor Hajime Okamura, Department of Engineering, Tokyo University). Alternatively, mixing agents that prevent separation have been used to prepare concrete which does not separate when poured into water.

Further, fiber concrete wherein fibers or light aggregate is mixed and other light weight concrete have already been developed and utilized.

The following are problems associated with the above mentioned prior art technology.

(a) In the case of high performance concrete, the raw materials used must be carefully selected, and when they contain a high powder content, small quantities of viscosity enhancing agents must be added in order to allow the fluid concrete to resist separation.

Because of this, close control is required over both the materials used and the preparation. It is very difficult to formulate this type of concrete on site.

(b) Concrete to which anti-washout anti-separation admixtures have been added to prevent segregation has generally poor fluidity, so filling problems are encountered when pouring the concrete into forms with closely spaced reinforcing bars.

Also, because it has a large unit water content, the water density of the concrete declines which lowers its resistance to carbonation, causes a high degree of shrinkage during drying, and which, due to the large air bubbles within, causes lowered resistance to freezing and thawing and thus,lowered durability.

(c) In the case of fiber concrete, fibers have been mixed in order to increase the bending strength, tensile strength or durability strength. However, if fibers gather in part of the concrete and form fiber balls, such fibers do not contribute to increase of bending or tensile strength or toughness.

In order to solve this problem, fibers had to be equally distributed in concrete which required the repeated mixing in of small amount of fibers or long mixing in time for the fibers and did not achieve an economic production of concrete.

(d) Fibers are different in density and there has been a problem that fibers having a high density sink to the bottom of concrete and fibers having a low density float in the concrete.

(e) Fibers tend to be covered with water films due to breathing, thereby caused lowering of contacts between concrete and fibers.

(f) Light weight aggregates are porous, and conveying prior art concrete which includes the light weight aggregates by pumping under pressure causes a problem because the water permeates into the pores of the aggregates due to the pressure.

This resulted in the further problem that the water necessary for making the concrete sufficiently fluid to be pumped was derived from mortar and permeates into the aggregates, and thereby the smooth conveying of the concrete was prevented.

(g) To prevent the absorption of water by the light weight aggregates, water has been absorbed into the aggregates before mixing. This caused an increase in the much of steps and work involved. Further, if water was absorbed in excess, it caused the problem that freezing of water in the aggregates lowered the durability of the concrete against repeated freezing and melting, though the smoothness of conveying the concrete by a pressure pump was improved.

(h) To convey the prior art light weight concrete with a pump, pump pressure had to be lowered to prevent the problems caused by water absorption, thereby necessitating the distance the concrete is conveyed under pressure to be shortened.

SUMMARY OF THE INVENTION

An object of this invention is to provide a method of manufacturing of concrete products which employs a raw concrete which has high fluidity, high filling capacity, and a high resistance to separation.

In more this detail, invention relate to a method of manufacturing concrete products in which $\beta$-1,3-glucan and a superplasticizer are added to a cement-type hardening material, and where the raw concrete is used to fill a specific space and is then cured.

Still another object of the present invention is to provide fiber concrete having fibers well mixed in and having satisfactory strength.

Yet another object of the present invention is to provide light weight concrete which does not obtain water from the mortar and does not absorb the water into its aggregates even though high pressure is applied to the porous light weight aggregates, and such concrete is further capable of being conveyed over long distances under pressure.

This invention further relates to raw concrete wherein fibers and/or light weight aggregates are mixed.

## DESCRIPTION OF DRAWINGS

Figure 1 is a schematic diagram of the fluidity test device for the concrete used in the method of this invention.

Figure 2 is a schematic diagram of the fluidity test device for the concrete used in the method of this invention.

Figure 3 is a schematic diagram of the fluidity test device for the concrete used in the method of this invention.

Figure 4 is a schematic diagram of the fluidity test device for the concrete used in the method of this invention.

Figure 5 shows the position of the core samples taken for the compression strength test.

Figure 6 is a chart for the compression strength tests.

Figure 7 is a schematic diagram of the test filling apparatus.

Figure 8 is a schematic perspective view of the test for putting concrete into an enclosed space.

Figure 9 is a schematic sectional view of for the rising state of the concrete surface.

Figure 10 is a sectional diagram of a synthetic structure.

Figure 11 is a schematic diagram of the drop test where concrete is dropped from a high position.

Figure 12 is a chart diagram which compares the compression strength of drop-poured concrete.

Figure 13 is a schematic sectional diagram of the concrete joining test.

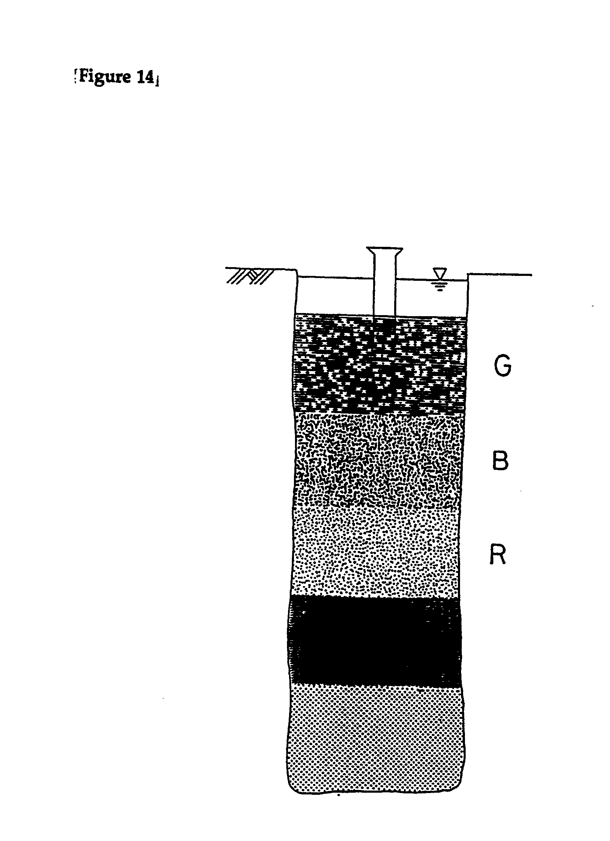

Figure 14 is a schematic sectional diagram of the distribution of concrete poured underwater.

Figure 15 is a comparative diagram on fiber dispersion of the fiber concrete of the present invention and the fiber concrete of the prior art.

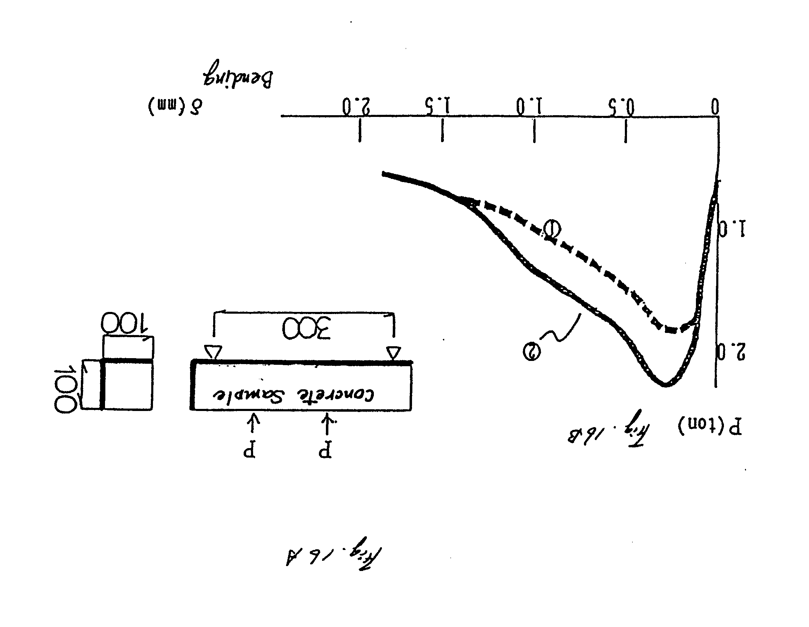

Figure 16A shows the size of samples and method of applying weights and figure 16B shows a diagram of the relationships between the bend weights and amounts of bend.

## DESCRIPTION OF PREFERRED EMBODIMENTS

The materials making up the concrete which is used in the method of this invention will now be described.

Further, basic raw concrete provided before mixing with the fibers and/or light weight aggregates will be explained.

### Cement

Various types of cements, such as Portland cement, which contain modifying agents such as silica, diatomaceous earth, blast-furnace slag, fly ash, silica fume may be used.

This invention yields good results when used with micro-fine silica type powders such as silica fume (with a surface area of 200,000 $cm^2/g$ or higher). In other words, this fine powder has a surface area which is at least one order or smaller in surface area than that used in regular cements. By so doing, the amount of anti-separation agent used can be reduced and yet viscosity is increased, while fluidity and filling properties are maintained.

As a result of reducing the amount of anti-separating agent used, one can improve the compression strength of the cured concrete.

### $\beta$-1,3-glucan

Glucan is any polysaccharide composed only if recurring units of glucose;i.e., a homopolymer of glucose. Example include glycogen starch and cellulose. See Dorland's Illustrated Medical Dictionary, 26th Edition 1981.

$\beta$-1,3-glucan is a polysaccharide formed from glucose having primarily $\beta$-1,3-bonds. Specific examples of it are curdlan, paramylon, pachyman, scleroglucan, laminalrin and yeast glucan, etc. In this invention, curdlan is preferred.

3

Curdlan, as described in New Food Industry, Volume 20, No. 10, pp. 49-57 (1978) incorporated herein by reference is primarily comprised of $\beta$-1,3-glucoside bonds; it is a polysaccharide which solidifies when heated. In other words, it is a polysaccharide which, when heated in the presence of moisture, solidifies to form a gel.

These polysaccharides can be produced by Arcaligenus or Agrobacterium genus bacteria. Specifically, it is possible to produce polysaccharide using the Arcaligenus faecalis var. myxogenes 10C3K produced polysaccharide (Agricultural Biological Chemistry, Volume 30, pp. 196 (1966)); Arcaligenus faeclis var. myxogenes bacteria 10C3K mutant strain NTKu (IFO 13140) produced polysaccharide (see Japanese Kokoku (examined) Patent No. 48 (1973)-32673); or the polysaccharide produced by Agrobacterium rediobacter (IFO 13127) or its mutant strain U-19 (IFO 12126) (Japanese Kokoku Patent No. 48 (1973)-32674).

As described above, curdlan is a polysaccharide produced by microorganisms, but it can be used in this invention as-is, in unrefined form, or, if needed, in a highly refined state.

As stated above, paramylon is one type of $\beta$-1,3-glucan. It is a stored polysaccharide which is stored within the cells of the Euglena microorganism. Thus, paramylon is a known polysaccharide and is documented in Carbohydrate Research, 25, 231-242 (1979), and through Japanese Kokai (unexamined) Patent Nos. 64(1989)-37297 and 1(1989)-37297. Unlike curdlan, however, this polysaccharide does not solidify when heated, but it may be used, treating it with alkali if necessary in order to obtain this property.

The paramylon may be used in this invention, either unrefined, or in highly refined form as required. If these microorganism-derived $\beta$-1,3-glucan, particularly curdlan and paramylon, are treated with alkali as will be described below, they are capable of forming a cross-linked gel with polyvalent metal ions having a valence of 2 or higher such as calcium ion, magnesium ion, copper ion or cobalt ions, etc., when in their presence. This type of glucan which has the capability to form a metal ion cross-linked gel can be obtained by dissolving the microorganism-derived $\beta$-1,3-glucan in an alkali aqueous solution and then bringing it into contact with a water-soluble organic solvent in order to precipitate the $\beta$-1,3-glucan, and then, preferably, neutralize it to pH 6-7.

Another method of obtaining metal ion cross-linked gel-forming $\beta$-1,3-glucan involves freezing an alkali aqueous solution of the above-mentioned $\beta$-1,3-glucan and then bringing that frozen solution into contact with a water soluble organic solvent to precipitate the $\beta$-1,3-glucan and then neutralize it. The glucan so obtained can then be dehydrated and dried to a powder form as required.

In the above described methods, alcohols, such as methanol, are the preferred water-soluble organic solvents for precipitating the glucan. Also, the preferred alkali substances to prepare the alkali aqueous solution are sodium hydroxide, potassium hydroxide, or ammonium hydroxide, etc.

This type of $\beta$-1,3-glucan which has the property for forming a metal ion cross-linked gel as described above is especially preferable for use in this invention for the forming the aid agent added into the compound having calcium ion, for example.

In this invention the $\beta$-1,3-glucan functions as an agent to reduce separation. To wit, the $\beta$-1,3-glucan increases the viscosity of the concrete, and as a result, it functions to prevent separation of the water and aggregate and improves their fluidity when pouring.

## Superplasticizer

The superplasticizers used in the method of this invention are the same ones normally used with concrete; i.e., in the specification of this application, this should be taken to include high range AE (air-entraining) water reducing agents and fluidity enhancers which are known in the art.

Specific examples are naphthalene substances typified by formalin-naphthalene sulfonate condensate; melamine substances such as formalin-melamine sulfonate condensate; carboxylic acid agents and lignin agents.

Any suitable superplasticizers for concrete can be used for purpose of this invention.

These materials act to improve the fluidity and filling properties of concrete which has enhanced viscosity. Normally, it is possible to reduce the water twice as much as with the usual water reducing agents.

Also, it is possible to use other types of agents in the concrete used in the method of this invention to reduce water or to incorporate air, etc. Examples of such include AE agents, AE water reducing agents, water reducing agents or other conventional agents used with normal concrete.

## Mixing Method

4

The method for mixing the raw concrete in this invention is essentially the same as the methods used for concrete of the prior art. The mixing follows the normal order for making the water addition.

The better method is to divide the water into two lots and add separately and then mix. This method itself is fairly generalized as a lot mixing method, so this general method should be followed.

Using the lot mixing method allows some improvement in the resistance to separation exhibited by the concrete mix. As a result, it is possible to reduce the amount of anti-separation agent or superplasticizers used and still obtain the required fluidity, resistance to separation and filling properties.

Also, with regard to the addition order in the mixing, one may, after including the $\beta$-1,3-glucan to prepare a hardish raw concrete mix, and then mix the superplasticizers just prior to pouring, or, one may first add the superplasticizers and then add the $\beta$-1,3-glucan to the concrete and then mix everything together, or finally, one may mix the raw concrete to prepare a regular raw concrete mix, and then add, either simultaneously or successively, the $\beta$-1,3-glucan and the superplasticizers.

With regard to the filling method used for the raw concrete prepared as described above, one may impart a light vibration to the concrete itself or the form while pouring; work the raw concrete as the form is filled from top to bottom by applying pressure from the top; pour the raw concrete so that it flows down along the walls of the form; or use a guide pipe from an opening (tremie pipe) to let the raw concrete flow or drop down to fill the form--any method for filling a container with a fluid may be employed. In addition, one may use concrete pouring methods of the prior art, including applying strong vibrations to the concrete or the form.

Further, it is possible to pour raw concrete on top of, below, on the side of, or in gaps between existing cured concrete, or to fill depressions in cured concrete so there will be no voids.

The above described methods for pouring the raw concrete of this invention also apply to pouring it underwater.

It is best that the form in which the concrete is poured be tight to prevent raw concrete from leaking out, but it is desirable to have air escape holes.

The method steps themselves for mixing of the concrete of the present invention are not particularly critical, and general methods of mixing known to public may be adopted in carrying out the invention.

For example, cement and aggregates may be put into a mixer and water mixed with various additives may be supplied thereto.

Example of Formulation

The following is a preferred example of the composition of the concrete of this invention. Below, the term "cement" will mean the mixture of binding materials and quality improving agents.

To binder materials (Portland cement, fly ash and blast furnace slag for the concrete which should be 250 to 700 kg/m³ per unit volume), 0.01 to 1.0% by weight of $\beta$-1,3-glucan, preferably 0.2 to 1.0% by weight; and 0.2 to 6.0% by weight of superplasticizers, preferably 0.5 to 3.0% by weight would be added.

Also, in cases where silica fume or other ultra-fine silica powder is used, it is preferable that the silica powder material comprise about 6 to 30% by weight of the binder materials. An example would be where the total of Portland cement, fly ash and blast furnace slag in the concrete was 350 to 800 kg/m³ per unit volume, the silica fume should be 50 to 100 kg/m³ and the $\beta$-1,3-glucan should range from 0.02 to 1.0% by weight and the superplasticizers should be 0.5-3% by weight.

Making Light Weight Concrete

Adequate amounts of light weight aggregates are mixed into raw concrete, which is the basis of the present invention.

"Asano Light" (product of Nihon Cement Co., Ltd.) or "Mesa Light" (product of Mitsui Mining & Smelting Co., Ltd.) is preferable as the light weight aggregates. The concrete mixed with these aggregates has high separation resistance, and light weight aggregates mixed are dispersed equally and do not float into the upper portion of the concrete.

When the light weight concrete is conveyed with a pump with pressure and poured into a mold at a site, the high separation resistance of the concrete prevents the water in the mortar from permeating into the pores of aggregates due to the pressure, and mortar is conveyed to the final site maintaining the proper water amount prescribed at the beginning.

Any of the light weight aggregate specifically mentioned herein can be used in these examples with comparable results being obtained.

Making Fiber Concrete

Adequate amount of fibers are added to the basic concrete described above. The fibers may by used regardless their specific gravity. Because of the high separation resistance of the concrete, fibers mixed are dispersed equally and do not concentrate to a specific portion.

Steel fibers, even though having high specific gravity, do not sink toward the bottom of concrete during the process of mixing, transporting or pouring, due to the high separation resistance of the concrete.

Further, fibers having low specific gravity such as Aramid fibers or Vinylon fibers do not float toward the upper portion of concrete and maintain the state of equal dispersion in the concrete.

Any of the fiber specifically mentioned herein can be used in these example with comparable results being obtained.

For these reasons, the concrete having uniform and increased strength such as bending strength or toughness is provided.

The concrete of this invention does not separate; rather it exhibits the properties of a mud-like fluid. When pouring into a specific space, it is not necessary to use vibrations, or strong vibrations to achieve good filling to every corner of the form without the aggregate separating.

Because of this, (1) the form used may be of complex shape and the fluidity properties of the concrete in no way restrict the shape of the form.

In addition, (2) it can be poured either into tight spaces or very broad spaces where a vibrating device could not be used. This is beneficial to the health of the workers and improves the safety in the working environment.

Also, since there is no breathing or other types of material separation directly after pouring the concrete, even if the space filled is irregular and complex, it is possible to obtain a uniform and long-lived concrete structure or product, having excellent dispersion capability when mixed with fibers or light weight aggregates, or to fabricate concrete precastings.

What is meant by "specific space" for the concrete is the space encompassed by the external shape (frame) for the concrete structure.

The volume of this space for the concrete materials may be several cubic meters, and may even be a massive structure such as a building or dam and still fit the "concrete product" category as defined for this invention.

Example 1

Concrete with the composition specified below was prepared and its fluidity, filling properties, and resistance to segregation were tested.

EP 0 462 602 A1

Table 1 (Continued)

| Maximum size of course aggregate (mm) | Water-binding material ratio (%) | Sand aggregate ratio (%) | Unit content (Kg/m³) | | |
| --- | --- | --- | --- | --- | --- |
| | | | Water W | Cement C | Blast-furnace slag B |
| 20 | 30 | 41 | 150 | 150 | 150 |

| Unit content (Kg/m³) | | | | | |
| --- | --- | --- | --- | --- | --- |
| Fly ash F | Fine aggregate S | Course aggregate G | Admixture (Binding material × WT%) | | |
| | | | Superplasticizer | AE water reducing agent | Viscosity agent |
| 200 | 663 | 940 | 5(1.0) | 0.75(0.15) | 1.5(0.3) |

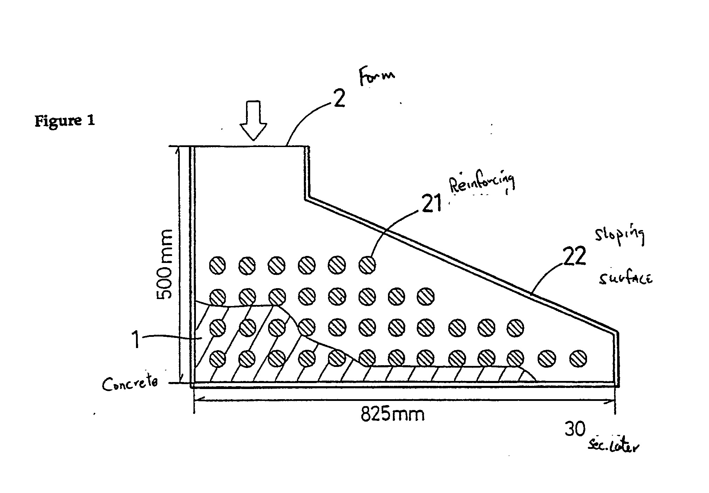

In order to test the properties, the concrete 1 of this invention was poured into form 2 which contained numerous reinforcing bars 21, bars with a minimum gap between them of 35 mm as shown in Figure 1.

Form 2 was 500 mm high, 825 mm wide and was partially covered by a sloping surface 22 which formed the ceiling.

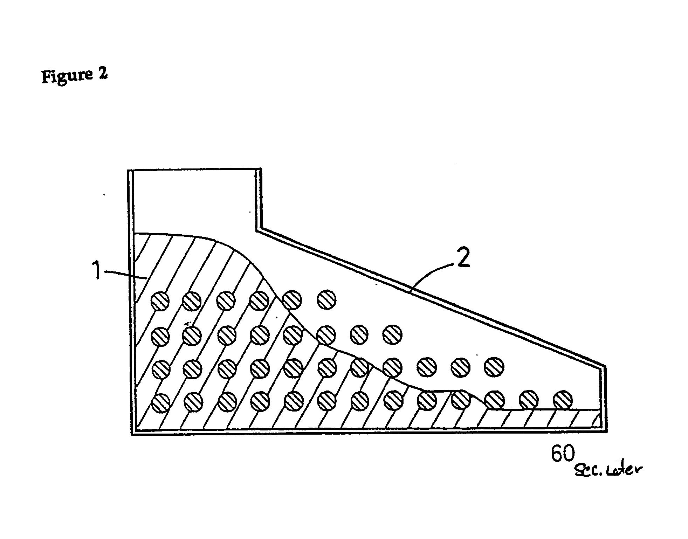

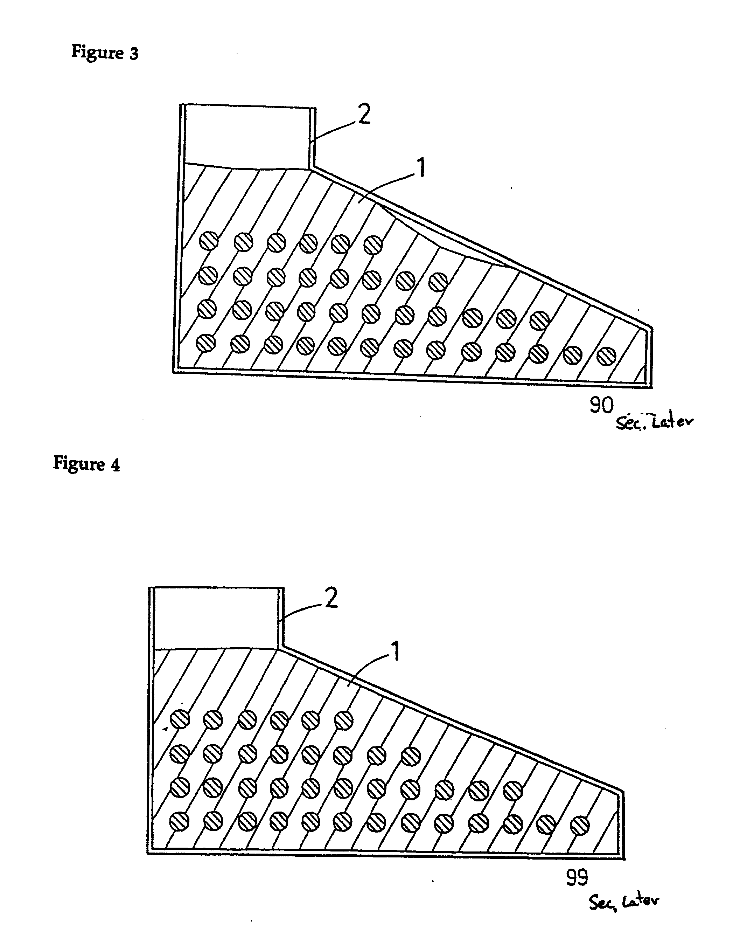

In this test, the concrete 1 was simply poured into the form 2; no vibrations were used, but when checked about 99 seconds after pouring, the concrete had completely filled the inside of the form. (Figures 1 through 4)

Next, tests were performed to evaluate the strength and durability of the same composition. The data obtained is displayed in the table 2 below.

Table 2

| Material Age | 7 days | 28 days | 91 days |
| --- | --- | --- | --- |
| Compressive Strength (kg f/cm²) | 289 | 429 | 521 |

Freezing and thawing resistance: relative dynamic modulus of elasticity 90% (after 300 cycles)
Amount of drying shrinkage: 340 μ (after 4 weeks had elapsed)

It is clear that the above values are equivalent to those of normal concrete; no decline in durability was noted.

The resistance to salt permeation, resistance to sea water, resistance to chemicals, and resistance to neutralization were all considerably better than obtained for normal concrete.

7

Comparison of Compression Strength

A comparison of compression strength was made between this concrete product and one made from normal concrete.

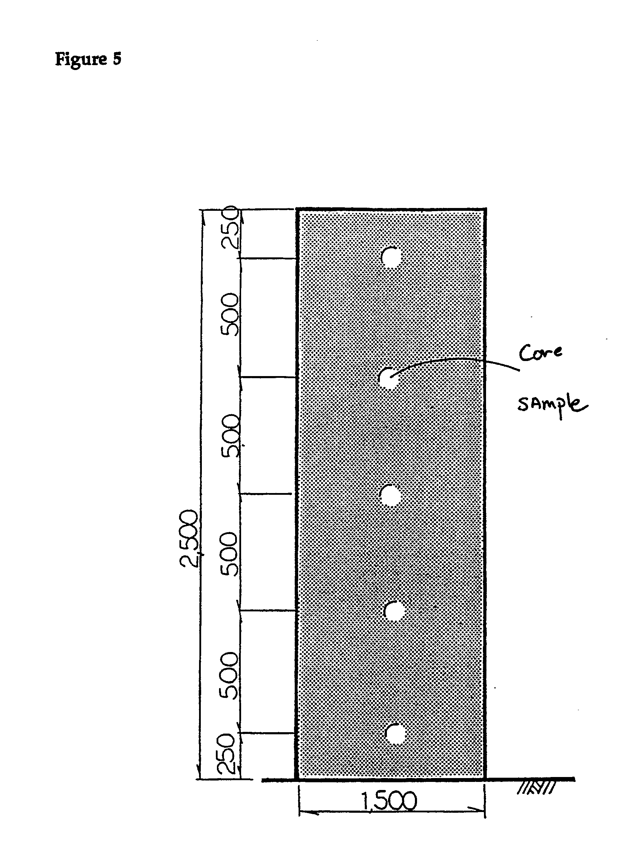

The following two types of concrete were poured into the concrete wall forms shown in Figure 5. After 28 days, core samples were taken from the positions shown in the figure and tested for compression strength.

1. The above described separation reduction agent, superplasticizers, etc. were added (eg. the concrete of this invention) and the concrete was poured without the use of vibration.

2. The above additives were not used (prior art concrete, where no separation reduction agents or other additives were used) and the concrete was poured without the use of vibration.

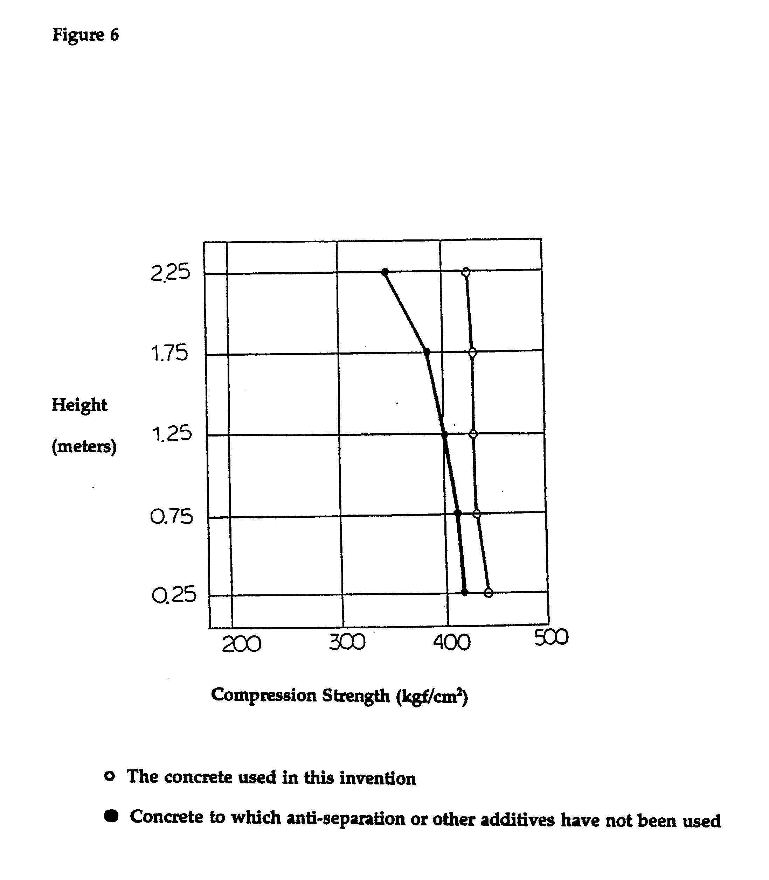

The results are as shown in Figure 6. When the concrete of this invention was poured, despite there being no vibration accompanying the pouring, there were no variations in the compression strength among the samples taken from various positions. However, there were large variations in the compression strength among the samples from the comparative example.

Example 2

The amounts of regular Portland cement (powdered to about 3250 cm²/g), fine blast furnace slag powder (about 4300 cm²/g) and fly ash (about 3000 cm³/g) were varied as shown in the table below to prepare 5 different concrete compositions for a mixing test. Slump flow measurements and filling tests were then conducted.

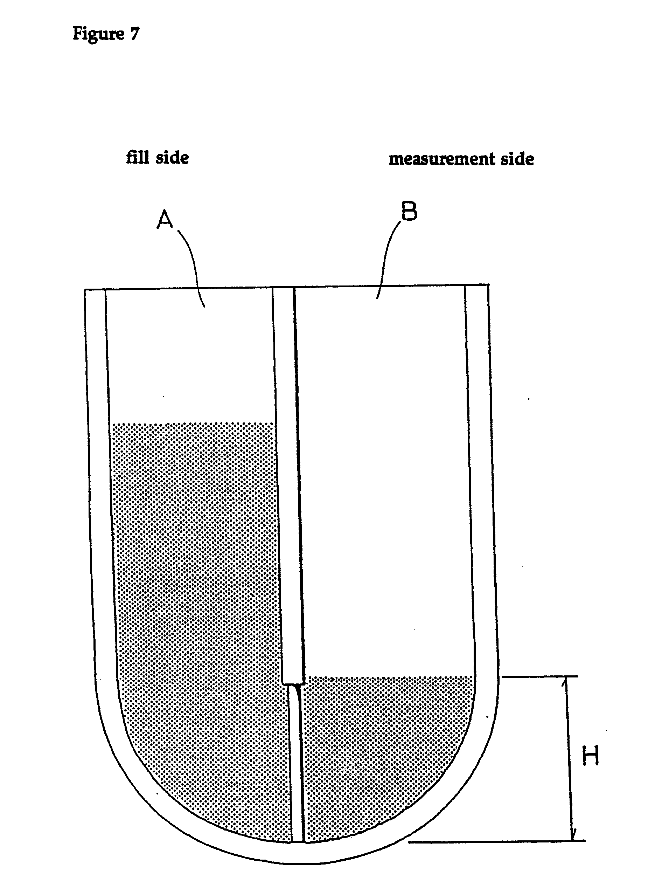

The U-shaped vessel shown in Figure 7 was used for the filling test.

One side of this vessel was a concrete filling chamber A while the other side was a measurement chamber B with a connecting window established between them.

The connective window had steel bars established in it at 35 mm intervals. At the beginning of the test, the whole window was closed by a shutter.

The test was conducted by filling the A filling chamber with the concrete being tested and then the shutter was opened, and the height H to which the concrete rose in the B measurement chamber was determined in order to measure filling properties. When concrete of the prior art was similarly tested, its flow from the A filling chamber to the B measurement chamber was blocked by the steel bars (at 35 mm intervals).

The results are indicated in the right column of the table below. It was found that the minimum weight of binding material (cement + fine blast furnace slag powder + fly ash) needed, while maintaining good fluidity and filling properties was 400 kg/m³ (200 + 200 + 0).

These results were obtained for multi-staged disposition of iron bars at a true interval of 35 mm between them, but when the gap between the bars was greater, it was possible to reduce the unit binding material used to a minimum of about 350 kg/m³.

Table 3 (Continued)

| Mix No. | W (Kg/m³) | C (Kg/m³) | B (Kg/m³) | F (Kg/m³) | S (Kg/m³) | G (Kg/m³) |
|---------|-----------|-----------|-----------|-----------|-----------|-----------|
| 1 | 165 | 150 | 150 | 200 | 698 | 884 |
| 2 | 170 | 200 | 200 | - | 925 | 799 |
| 3 | 180 | 225 | 225 | - | 853 | 802 |
| 4 | 180 | 225 | 225 | - | 853 | 802 |
| 5 | 185 | 225 | 225 | - | 840 | 802 |

| Mix No. | SP WT% in Binding material | BP WT% in binding material (WT% in water) | S/A (%) | Slump flow value (cm) | Filling Height H (mm) |
|---------|------|------|------|------|------|
| 1 | 1.35 | 0.36 (1.1) | 45 | 67.5 | 320 |
| 2 | 2.0 | 0.34 (0.8) | 55 | 64.0 | 300 |
| 3 | 1.7 | 0.6 (1.5) | 53 | 68.5 | 312 |
| 4 | 1.7 | 0.64 (1.6) | 53 | 57.5 | 345 |
| 5 | 1.6 | 0.66 (1.6) | 53 | 63.3 | 350 |

W: Water

C: Portland cement

B: Ground granulated blast-furnace slag

F: Fly ash

S: Fine aggregate

G: Coarse aggregate

SP: Superplasticizer(Hiaghly condensed formalin naphthalenesulfonate is used)

BP:Viscosity agent (Curdlan is used)

A: (S+G)

S/A: Fine aggregate proportion

Example 3

Silica fume was substituted for the fly ash of Example 2 in the mixes. The compositions and test results are shown in the following table. In this table, mix No. 1 is the standard composition. Mix Nos.2 through 5 used silica fume, but no fly ash at all.

From these results, it was determined that the weight of binding materials (C + B + SF) should be about 450 kg/m³. The reason for this is that in the slump flow, there was some decline in fluidity, but on the other hand, filling properties remained extremely good so it was determined that the filling characteristics were sufficient.

<u>Table 4</u>                                  (Continued)

| Mix No. | W (Kg/m³) | C (Kg/m³) | B (Kg/m³) | F (Kg/m³) | SF (Kg/m³) | S (Kg/m³) | G (Kg/m³) |
|---|---|---|---|---|---|---|---|
| 1 | 165 | 150 | 150 | 200 | - | 698 | 884 |
| 2 | 180 | 200 | 200 | - | 50 | 800 | 845 |
| 3 | 185 | 200 | 200 | - | 50 | 794 | 839 |
| 4 | 190 | 200 | 200 | - | 75 | 774 | 818 |
| 5 | 195 | 200 | 200 | - | 75 | 767 | 811 |

| Mix No. | SP WT% in Binding material | BP WT% in binding material | (Kg/m³) | WT% in water | S/A (%) | Slump flow value (cm) | Filling Height H (mm) |
|---|---|---|---|---|---|---|---|
| 1 | 1.35 | 0.36 | (1.82) | (1.1) | 45 | 67.5 | 320 |
| 2 | 1.95 | 0.40 | (1.82) | (1.0) | 50 | 53.3 | 320 |
| 3 | 1.95 | 0.40 | (1.82) | (0.98) | 50 | 55.5 | 313 |
| 4 | 2.20 | 0.35 | (1.61) | (0.87) | 50 | 55.8 | 310 |
| 5 | 2.10 | 0.35 | (1.65) | (0.85) | 50 | 54.0 | 333 |

SF: Silica fume

Other symbols are the same as in Table 3.

Example 4

Raw concrete was poured into the lower part of an enclosed space, that is, near the bottom of a form and the filling properties were tested.

What is meant here by "enclosed space" is the inside of a form built from boards so as to conform to the shape of the desired structure.

Therefore, the size of this space would depend upon the shape of the structure desired; it could be small, on a scale of several cubic meters, or very large, for a building, tank or tower.

Experimental Sample

The experimental sample was a pillar 3.6 meters high cast into form 4. The cross section of the pillar was 600 mm x 600 mm.

Inside of this pillar form 4, reinforcing iron plates 5 were positioned in the transverse direction at 900 mm intervals. There were 180 mm diameter holes 6 in the centers of these reinforcing plates and in their 4 corners, there were 30 mm diameter air escape holes 7.

Concrete mix

The mix of the concrete was shown in Table 5.

## Table 5

| | Unit weight (kg/m²) |
|---|---|
| Water | 170 |
| Cement (Mitsubishi low heat generating cement) | 470 |
| Swelling material (Onoda Expand) | 30 |
| Fine aggregate | 743 |
| Coarse aggregate | 942 |
| Additives | |
| AE water reducing agent No. 70 | 0.9 |
| Superplasticizer M150 | 9.6 |
| β-1,3-glucan | 1.2 |

In the above formulation, specific ingredients described in this application can be substituted to obtain comparable results.

Pressure Input

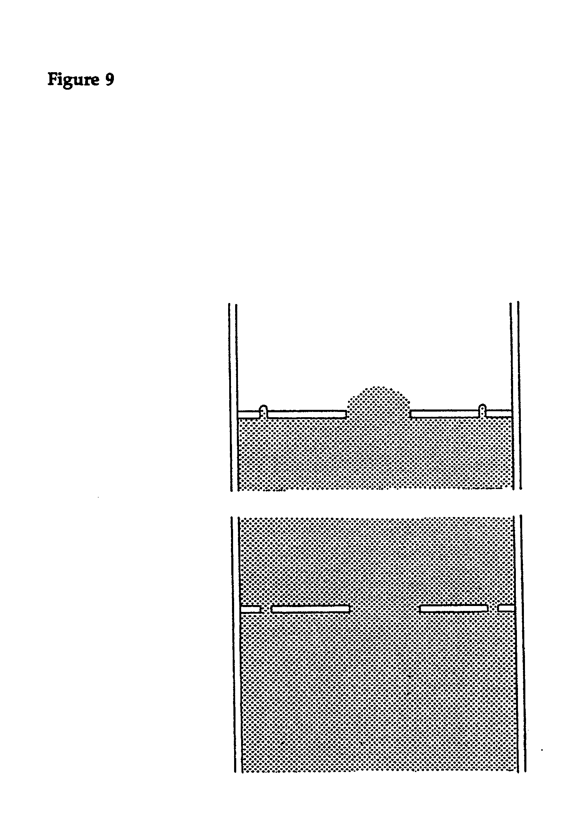

The raw cement was filled under pressure from the bottom of the form. The surface of the concrete remained fairly level as it rose and there was good filling at both the upper and lower surfaces of the reinforcing plates 5. (Figure 9).

After the concrete had cured, the form 4 was removed and the filling above and below the reinforcing plates 5 was observed. It was found that there were no voids; filling was sufficient even in areas most distant from the passage holes 6.

Next, in order to observe the filling properties on the inside, the concrete was cut both above and below each of the reinforcing plates 5. As a result, it was found that there was complete and uniform concrete filling, even to every corner below the reinforcing plates 5, which are usually difficult to fill.

Compression Strength

Test samples were cut from the cured concrete and compression strength tests were performed. The results appear in Table 6. It was found that strength was sufficient.

## Table 6

### Compression Strength Test Results
#### (units: kgf/cm²)

| | Sample 1 | Sample 2 | Sample 3 | Average |
|---|---|---|---|---|
| After 4 days | 156 | 155 | 161 | 157 |
| After 7 days | 266 | 267 | 263 | 265 |
| After 28 days | 458 | 473 | 465 | 465 |

Example 5

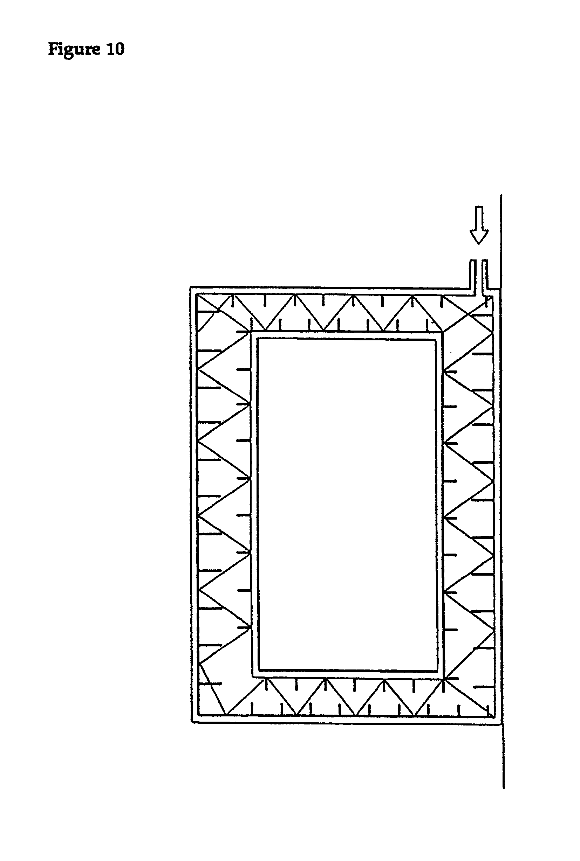

The steel plates were arranged in the form as shown in Figure 10 in order to prepare a synthetic concrete product. What is meant by "synthetic" is that the product is unitized between the concrete and steel plates. It is a structure which can be efficiently used for both its compression strength and for tensile strength of the steel plates. Therefore, the form was not disassembled after casting; it became a part of the concrete product. The inside and outside walls of the frame 8, 9 had a plurality of bolts on the inside which projected through dowels 10, and further, the inner and outer walls were linked by a plurality of trusses 11.

Concrete with the above described composition was input from the bottom into the enclosed space. When this was done, the above mentioned raw concrete exhibited good fluidity and even if a plurality of steel materials were alternately placed on the inside, fluidity was not impaired and every corner was filled. There was also no separation of the aggregate during this process due to the high resistance of the mix to separation.

After pouring, there was no bridging, so it was possible to obtain a synthetic product which was uniform and had a high degree of durability.

Example 6

The raw concrete described above was blown on a wall surface from a distance, or, it was dropped into or allowed to flow down into a form to fill it.

What is meant here by "blown on" is that compressed air was used to project the concrete onto the objective surface. "Dropped into" means that the raw concrete was allowed to freely fall into a form to fill it. "Flow down into" means that a temporary flow route was established and the concrete was loaded onto this flow route and allowed to flow into the form to fill it.

When concrete of the prior art is used with these methods, the relatively high specific gravity aggregate tends to precede the mortar and spatter; i.e., falling out and flying to the edge of the wall or form.

However, when the concrete prepared according to the method of this invention was used, there was no separation when blown on, dropped from a high place, or when it was allowed to flow down into the form.

Comparison of Spattering Ratio

A test for spattering ratio was conducted. One liter of the above described concrete with a high resistance to separation was compared with a liter of prior art concrete to which no anti-separation agent had been added. They were each dropped onto a floor from certain heights and the weight of the central lump, which did not spatter to the outside (W2) was measured. This was compared with the initial weight when dropped. The results were computed as:

Spattering loss ratio (%) = (W1 - W2)/W1x100.

## Table 7

| Dropping Height (m) | 1.5 | 2.5 | 5.0 |
|---|---|---|---|
| Concrete anti-separation agent (this invention's concrete) (%) | 0 to 5 | 5 to 10 | 10 to 15 |
| Concrete no additives (prior art concrete) (%) | 2 to 7 | 25 to 30 | 50 to 60 |

It is clear from the results shown in Table 7 that when the concrete of this invention is used, there is very little spattering even when allowed to freely fall.

Thus, this concrete can be blown onto wall surface by workers with little skill with the same uniformity in results as obtainable by skilled workmen.

Comparison of Compression Strength

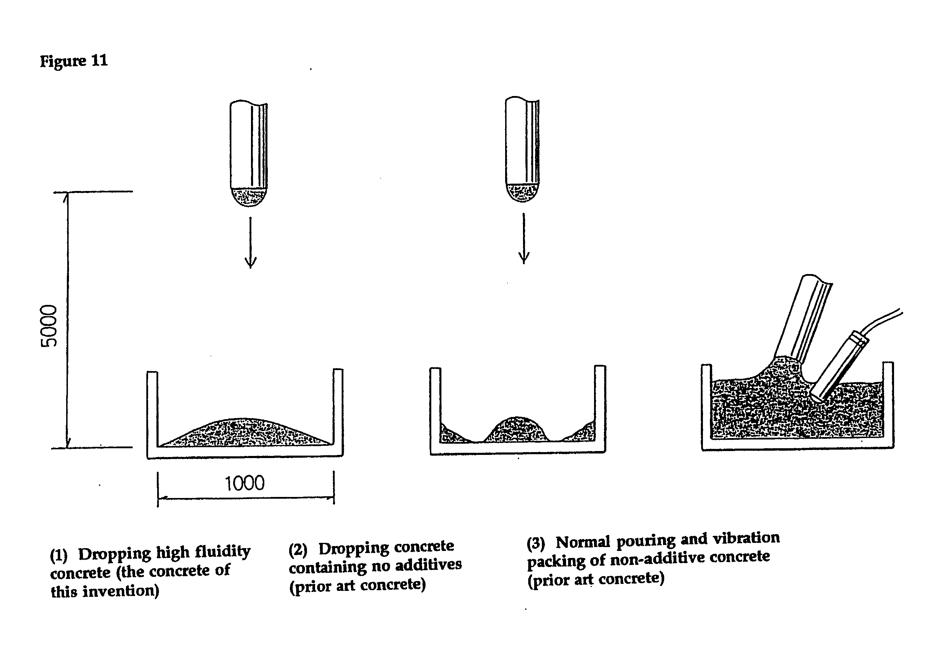

The forms shown in Figure 11 were used for the two types of concrete described below, which were dropped into them from a high of 5 meters, or directly poured into them.

(1) The concrete with the anti-separation additive (the high fluidity concrete of this invention) was dropped in.

(2) The concrete containing no anti-separation additives (prior art concrete) was dropped in.

(3) The concrete containing no anti-separation additives (prior art concrete) was gently poured in and packed using vibrations.

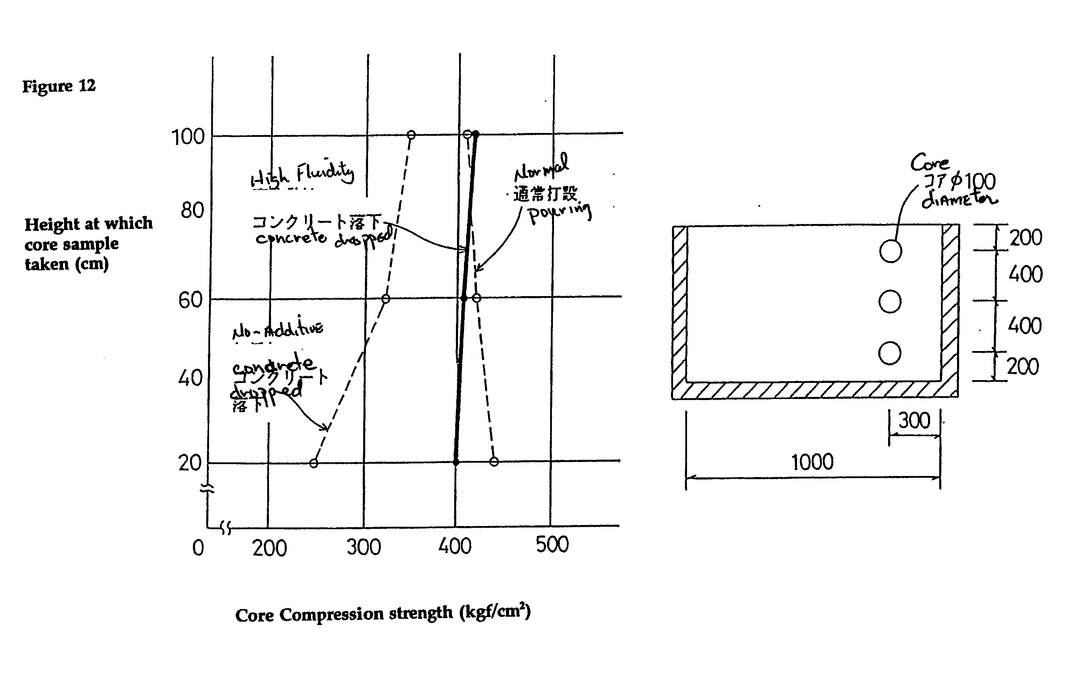

The above described three types of concrete products were cured for 28 days and then samples were taken and tested for compression strength. The results appear in Figure 12.

The results indicated that the compression strength of the concrete of this invention which was allowed to drop into the form was almost no different from that of the prior art concrete which was gently poured and packed with vibrations.

On the other hand, when dropped in, the prior art concrete had compression strength levels so low as to prevent its use in real applications.

Similar effects can be obtained when the raw concrete is blown onto wall surfaces.

Example 7

Concrete products were joined using raw concrete to which the anti-separation agent had been added. This joining operation involved joining pieces of cured concrete using raw concrete to unitize the two.

Because of the time and the curing shrinkage of concrete, the most difficult type of unitizing operation is one in which new concrete is set underneath cured concrete to join the two.

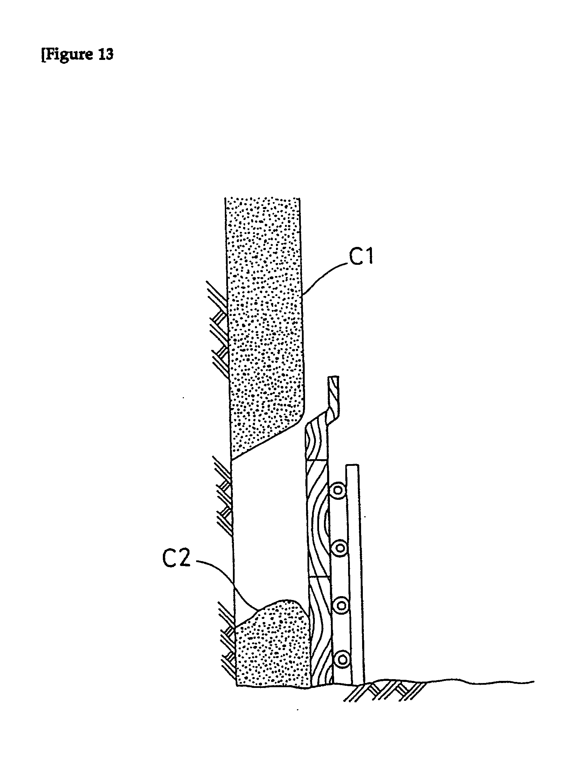

This will be described with reference to Figure 13, which shows the new raw concrete C2 being poured below an existing piece of cured concrete C1.

This method, where the raw concrete is poured below an existing concrete mass would, for example, be used to reinforce a wall while excavating under it. Since the concrete derived from the method of this invention exhibits good fluidity and has excellent filling properties, it is possible to fill every corner when pouring underneath an existing mass of cured concrete. Since it further has a high resistance to separation, no water bleeds out and the joining surface of the C2 concrete does not drop.

Because of this, there are no defective areas at the juncture and good unitization between the two can be realized.

Joining Strength Test

Next, the tensile strength of joints made using concrete derived from the method of this invention, and that of the prior art were compared. The cured concrete C1 had aged one year.

## Table 8

| | Joint Strength kgf/cm² | Water permeation Coefficient (cm/sec) |
|---|---|---|
| Prior art method (no aluminum powder used) | 2.0 | $5.5 \times 10^{-7}$ |
| Invention's method (no Al powder used) | 4.5 | $5.3 \times 10^{-10}$ |
| Invention's method (Swelling CSA used) | 4.5 | $3.1 \times 10^{-10}$ |

Table 8 shows a comparison of horizontal joints, while the following Table 9 shows a comparison of perpendicular joined concrete for tensile strength and water permeation coefficient.

## Table 9

| | Joint Strength kgf/cm² | Water permeation Coefficient (cm/sec) |
|---|---|---|
| Prior art method (no aluminum powder used) | 9.3 | $5.5 \times 10^{-9}$ |
| Invention's method (no Al powder used) | 10.5 | $5.3 \times 10^{-10}$ |
| Invention's method (Swelling CSA used) | 15.2 | $3.1 \times 10^{-10}$ |

It is clear from the above results shown in Tables 8 and 9 that the method of this invention allows the production of joined concrete which has improved joint strength. There is an order of 10 improvement in both the strength of the joint and the water permeation coefficient.

Example 8

The above described raw concrete with which an anti-separation additive was used was poured into water.

In this case, no special apparatus was used, merely the tremie pipe of the prior art where the raw concrete was input into the top end.

The end of the tremie pipe was placed, underwater, at the bottom of the form or at the bottom of an excavated ditch.

When concrete is poured in this matter, it first spreads to the sides of the form and forms a flat surface, and then the surface rises to reach the desired height while maintaining a level concrete surface under water.

Because of this, the initially poured concrete remained at the uppermost position and its top surface remained level. This means that slime and stable fluid remained on top of it as it rose, and was not incorporated inside of the concrete. This made it possible to obtain uniform quality in the underwater-poured concrete.

Fluidity Comparison

14

The fluidity was compared between prior art concrete and concrete of this invention when poured under water.

To do this, colored concrete was used and it was poured via a tremie pipe. After it had cured, a number of core samples were taken and fluidity in the perpendicular direction was estimated.

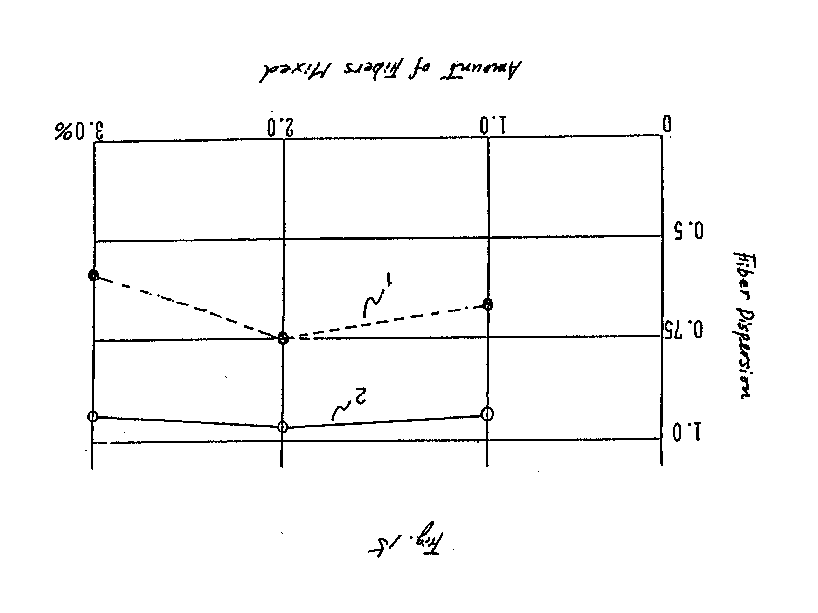

Those results appear in Figure 15. The initially poured raw concrete G maintained a level surface, while underneath, the blue B and red R concrete which pushed it up also maintained roughly-level surfaces.

Example 9

First, regular concrete, that is, concrete without any anti-separation additives was prepared in a concrete plant.

At this stage, no improvements at all were made to the existing concrete plant. This raw concrete was transported by cement mixer to the site where it was to be poured.

Just prior to pouring, the above described anti-separation agent was added to the mixer. The anti-separation agent was in powder form, so it had good dispersion properties because it does not dissolve in water. It was sufficiently dispersed and mixed into the concrete by the mixer.

Comparison of Dispersion

Next, the anti-separation agent was added at the time of initial mixing and compared to when it was added just before pouring in a test to confirm that similar results could be obtained for the differing addition times.

### Table 10

|  | kg/m³ |
|---|---|
| Water | 165 |
| Binding materials | 500 |
| Fine aggregate | 698 |
| Coarse aggregate | 884 |
| Superplasticizer | 7.25 |
| Anti-separation agent | 1.5 |

The results were compared for different addition times for the anti-separation agent: addition at the time of initial mixing and just prior to pouring:

### Table 11

|  | Slump flow (cm) | Air Amount (%) | Compression strength after 7 days kgf/cm² | Compression strength after 28 days kgf/cm² |
|---|---|---|---|---|
| Added when mixed | 65 | 4.2 | 293 | 429 |
| Added before pouring | 65 | 4.3 | 301 | 438 |

15

It is clear from Table 11 that with either of these methods, similar slump flow and air volume results were obtained.

Thus, it is very practical that despite the fact that a special type of raw concrete is being used, no special apparatus are required.

Furthermore, if a concrete plant cannot be used for such production for a whole day and other types of raw concrete must be produced afterward, it is not necessary for special considerations to make the other types of concrete.

In the above formulation, specific ingredients described in this application can be substituted to obtain comparable results.

Example 10

Comparison of water Absorption

The comparison was made as to the water absorption proportion between raw concrete of the present invention and raw concrete of the prior art by mixing the raw concrete shown in table 12 and artificial light aggregate material such as "Asano Light" (product of Nihon Cement Co., Ltd.) or "Mesa Light" (product of Mitsui Mining & Smelting Co., Ltd.).

## Table 12

|  | Present Invention | Prior Art |
|---|---|---|
| W | 165 | 156 |
| C | 150 | 347 |
| B | 150 | - |
| F | 200 | - |
| S | 695 | 815 |
| G (Light Aggregate) | 551 | 641 |
| SP (P x % by Weight) | 1.3% | 0.6% |
| BP (W x % by Weight) | 0.9% | - |
| S/A | 45 % | 45 % |

For the purpose of this comparison, certain amount of concrete was sampled just before and after conveying the concrete with a concrete pump with pressure. Mortar portion was washed out from the samples and the aggregates were taken out. By measuring weight of concrete samples under the condition of their surfaces dried, the resulting water absorption proportions (W/A) are shown in table 13 in the comparison manner.

## Table 13

|  | W/A before Convey with Pressure | W/A after Convey with Pressure |
|---|---|---|
| Concrete of Present Invention | 15% | 17% |
| Prior Art Concrete | 15% | 30% |

Slump Comparison

The changes of slumps before and after conveying concrete with pressure were then compared. If the larger slump changes of slump between before and after conveying concrete with pressure present, the more water in mortar was pressed into pores in the aggregates, since total water volume did not change.

However, the light concrete of the present invention is excellent in flowability and does not maintain a mountain shape when a slump cone is pulled up, whereas ordinary concrete shows such a mountain shape. Thus, slump flows were measured and compared before and after conveying the concrete in order to check that there were no slump changes. The results are shown in table 14.

## Table 14

|  | Slump before Conveying with Pressure | Slump after Conveying with Pressure |
|---|---|---|
| Present Invention Concrete | 65cm | 64cm |
| Prior Art Concrete | 18cm | 12cm |

As apparent from table 14, the concrete of the present invention presents the property that water is not absorbed into the aggregate since the water in the concrete is hard to be separated due to the large separation resistance even though large pressure is applied to the concrete when conveyed with pressure.

Example 11

Comparison on Fiber Dispersion

Dispersion capability of fibers into prior art concrete and concrete of present invention was compared. The concrete used for this comparison is shown in table 15.

## Table 15

|  | Present Invention | Prior Art |
|---|---|---|
| W | 165 | 165 |
| C | 150 | 150 |
| B | 150 | 150 |
| F | 200 | 200 |
| S | 698 | 689 |
| G | 884 | 884 |
| SP | 1.4% | 0.6% |
| BP | 0.9% | 0.6% |
| Steel Fiber | 1.0% | - |
| S/A | 45 % | 45 % |

In this comparison, coarse aggregations having 20mm in the maximum diameter and steel fibers (0.5 x 0.5 x 30mm) were used in concrete of both present invention and prior art.

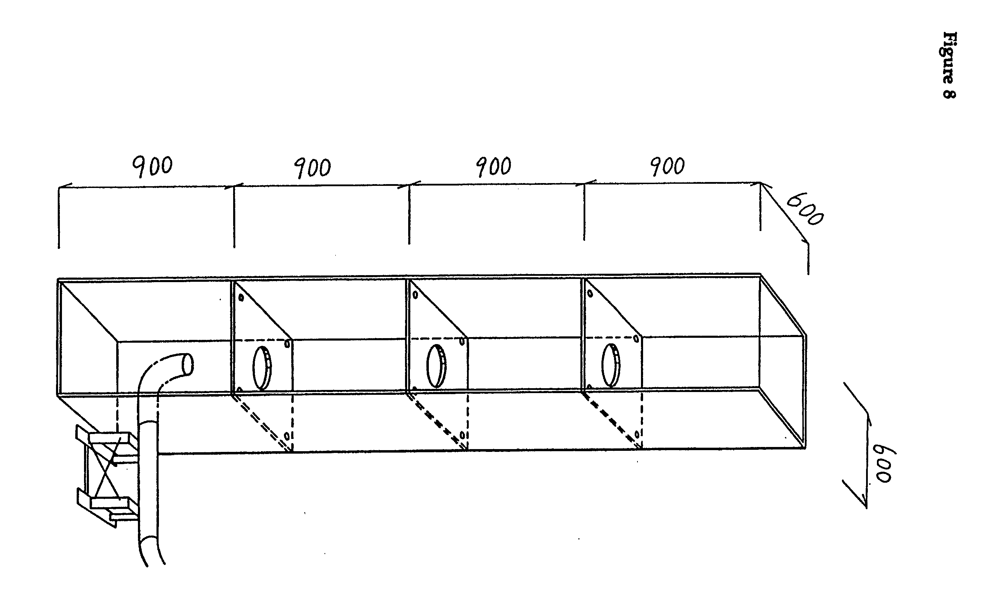

The results of the comparison are shown in Fig. 8. "Fiber Dispersion" and "Fiber Amount Mixed" are defined as follows:

$$\text{Fiber Dispersion} = \frac{\text{(Amount of fibers in a concrete sample (1l) sampled after mixing (Kg))}}{\text{(Amount of fibers put into 1l of concrete when mixing (Kg))}}$$

Fiber Amount Mixed = (Volume of Fibers mixed)/(Concrete volume)

In Fig. 8, the fiber amounts mixed were provided at 1.0%, 2.0% and 3.0%, whereby the comparison of fiber dispersions between the prior art and the present invention was made.

As apparent from Fig. 8, the dispersion of the present invention does not change greatly even though the amount of fibers mixed therein increases. This shows that fibers in the concrete are always dispersed in the stable conditions.

Comparison on Compression Strength

Further the comparison of bending strength between prior art fiber concrete and fiber concrete of the present invention was made.

Sample bodies both having a size of 100 x 100 x 400mm and having the same amount of steel fibers being mixed in are prepared. These sample bodies are horizontally supported at two points having 300mm in distance and the vertical weights P are given to the sample bodies at the trisection points, as shown in Fig. 9A. The relationship between weight P and bend are shown in Fig. 9B.

It is clear that, from Fig. 9B, the fiber concrete of the present invention can endure against greater weight and greater deformation than the prior art fiber concrete.

The following advantageous effects may be realized through this invention.

(a) It is possible to prepare concrete products having a complex shape by using raw concrete which has a high resistance to separation, high fluidity and good filling properties.

When poured, this concrete does not separate; the water and aggregate remain together and flow to every corner of the space in the form. Furthermore, after curing, there is no shrinkage.

Accordingly, it is also possible to prepare products using forms which have complex shapes and projections inside of them.

(b) In addition, the raw concrete will fill all corners and areas of the form without the use of vibration. This makes it possible to use simple methods to produce products without requiring packing by vibrations. Personnel who were required for packing the concrete are no longer needed, and the operation conserves working resources. Since the use of manpower is reduced, it is possible to mechanize or use robots for much of the concrete laying operations.

(c) In addition to preventing the separation of materials which have been insufficiently packed and hardened, this invention also prevents materials from separation which have been over packed and hardened. Because of this, water tightness and longevity are improved, and the concrete product can be much more uniform and stable.

(d) Compared with other concrete which has a high resistance to separation, the concrete of this invention does not require such strict selection of materials; any concrete which will satisfy the specification may be used. Because of this, excessive quality control is not required, and the method of the invention is applicable to normal construction sites.

(e) It can be used for pressed concrete material fabrication without the use of vibration.

(f) As shown through Examples 4 and 5, it can also be used in enclosed spaces where the raw concrete of the previously described composition can be input from the bottom of the space.

When this is done, the above described raw concrete exhibits excellent fluidity, and this fluidity is not impaired even when there are large numbers of steel reinforcing bars present--every area inside the form is filled by the concrete. Since it further has a high resistance to separation, there is no separation of the aggregate while the concrete is flowing.

Since there is no breathing after having been poured, the concrete product is uniform and has good longevity.

(g) As shown in Example 6, this concrete may be dropped from a high position, or blown on to walls from a distance. When the method of this invention is employed, despite dropping the concrete from a high position, there is very little loss due to spattering of the concrete.

Accordingly, it is possible to use workmen with little skill to perform concrete blow-on applications and still achieve the same uniformity in the wall surface as if highly skilled workers had performed the operation.

(h) As shown in Example 7, it is possible to join or patch existing concrete products. In particular, it is possible not just to cast raw concrete onto the top of existing concrete, but it is also possible to join raw concrete to the bottom surface of existing concrete.

With this method, it is possible to provide reinforcement to standing walls which under which excavation is taking place. The raw concrete can be poured right under the existing concrete.

The concrete used under the method of this invention exhibits good fluidity and excellent filling properties so it is possible to fill every corner when joining raw concrete to the bottom surface of existing concrete. Furthermore, since the concrete has a high degree of resistance to separation, no water bleeds out and there will be no sinking of the joining concrete C2.

(i) As shown by Example 8, it is possible to pour concrete underwater with the concrete of this invention.

Concrete poured in this manner first expands horizontally, and then a level surface rises so that any slime and stable liquid rides up on that surface without being incorporated into the concrete. Because of this, such concrete poured under water remains of uniform quality.

(j) As shown by Example 9, it is also possible to prepare normal concrete without any anti-separation additives at the concrete plant and then input the anti-separation additive on site into the cement mixer just prior to pouring.

Since the anti-separation agent is in powder form, it provides good dispersion properties since it will not dissolve in water. It can be easily mixed and dispersed within the raw concrete.

It is also clear from the table that about the same levels of slump flow values and are content are obtained when the additives are input just prior to pouring as when they are added at the time of initial mixing.

Accordingly, it is not necessary to use a special type of raw concrete or employ special types of apparatus. This is a very useful practical advantage.

It is possible to use a concrete plant for just a part of a day and then go on to make other types of concrete. Normal methods of preparation may be used without thinking about the successive batches of other types of concrete.

(k) The concrete has the high resistance to separation and the water in the concrete is hard to be separated.

(l) The amount of water absorbed by the aggregates is very small which enables simplification of the process and to reduce the number of workers involved since the water absorbing process for aggregates before the mixing may be eliminated. Further, the problem of lowering freezing and melting resistance due to the water absorption into the aggregates can be eliminated.

(m) Since water does not permeate into the aggregates, the concrete may be conveyed with high pressure, and the distance for conveying the concrete may be increased.

(n) Prior art light weight concrete had the problem of having a tendency to float towards the surface during pouring with vibration, due to its small specific weight.

However, the light weight concrete of the present invention has excellent flowability and high separation resistance and may be poured without vibration uniformly into the iron bars arranged in high density. Accordingly, separation of materials does not occur due to the vibration.

(o) As shown in examples 10 and 11, the fiber concrete of the present invention has high resistance to separation and is capable of dispersing fibers uniformly in the concrete.

Accordingly, fiber ball formation in the concrete is prevented and the concrete having excellent quality may be provided.

(p) the high resistance to separation of the concrete further prevents fibers having high specific gravity from sinking toward the bottom of the concrete or prevents fibers having low specific gravity from floating toward the upper portion of the concrete, whereby a uniform dispersion state of fibers is obtained.

(q) No breathing occurs in the concrete of the present invention and no cavity is created around the fibers due to the breathing water, whereby adhering capability between the fibers and the concrete is not lowered.

(r) As a result of the foregoing various properties, the concrete of this invention has excellent strength, such as bending strength, and toughness, which enables the easy production of thin members without using iron bars.

**Claims**

1. A method for manufacturing a concrete product comprising adding a sufficient amount of $\beta$-1,3-glucan

to a cement hardening material, mixing the resulting composition, to filling a space with said composition and curing to form said product.

2. The method according to claim 1 which additionally comprises mixing into the composition a sufficient amount of a superplastercizer to provide its intended effect.

3. The method according to claim 1 wherein a raw concrete is poured in from the bottom in a space enclosed by structural concrete forms.

4. The method according to claim 1 wherein a raw concrete is blown onto a surface.

5. The method according to claim 1 wherein the raw concrete is allowed to flow or drop down onto a surface.

6. The method according to claim 1 wherein a raw concrete is used to patch or join concrete which has already cured.

7. The method according to claim 1 wherein the raw concrete is poured into water.

8. The method according to claim 2 wherein the $\beta$-1,3-glucan and superplasticizer are added to raw concrete after initially mixing it.

9. The method according to claim 1 wherein the $\beta$-1,3-glucan is a member selected from the group consisting of curdlan, paramylon, pachyman, scleroglucan, laminalrin and yeast glucan.

10. The method according to claim 2 wherein the superplastercizer is a naphthalene compound.

11. the method according to claim 1 wherein the cement hardening intended is selected from the group consisting of silica, diatomaceous earth, blast-furnace slag, fly ash and silica fume.

12. The method according to claim 1 wherein conventional aggregate suitable for the manufacture of concrete is introduced into the composition.

13. Raw concrete including cement-type hardening agents to which $\beta$-1, 3-glucan and a superplasticizer are added, further wherein fibers and conventional light weight aggregates are mixed.

14. A shaped article made from the composition of claim 13.

Figure 1

**Figure 2**

60 sec. later

**Figure 3**

90 *Sec. Later*

**Figure 4**

99 *Sec. Later*

**Figure 5**

**Figure 6**

Height
(meters)

Compression Strength (kgf/cm²)

○ The concrete used in this invention

● Concrete to which anti-separation or other additives have not been used

**Figure 7**

fill side                 measurement side

A                    B

H

**Figure 8**

**Figure 9**

Figure 10

EP 0 462 602 A1

**Figure 11**

(1) Dropping high fluidity concrete (the concrete of this invention)

(2) Dropping concrete containing no additives (prior art concrete)

(3) Normal pouring and vibration packing of non-additive concrete (prior art concrete)

Figure 12

[Figure 13

{Figure 14}

Fig. 15

Fig. 16 B

Fig. 16 A

European
Patent Office

**EUROPEAN SEARCH
REPORT**

Application Number

**EP 91 11 0095**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | EP-A-0 432 770 (TAKEDA CHEMICAL IND. & TAISEI CORP.) <br> * Page 3, line 1 - page 4, line 36; claims * <br> — — — | 1-3,8-12, 14 | C 04 B 24/38 <br> C 04 B 28/02 // <br> (C 04 B 28/02 <br> C 04 B 14:08 |
| P,X | EP-A-0 409 609 (TAKEDA CHEMICAL INDUSTRIES) <br> * Page 4, line 2 - page 5, line 25; claims * <br> — — — | 1,3,9, 12-14 | C 04 B 14:38 <br> C 04 B 24:22 <br> C 04 B 24:38 |
| X | US-A-4 462 836 (W.S. BAKER et al.) <br> * Column 3, line 8 - column 4, line 24; claims 1,20-22,27,38 * <br> — — — | 1-3,5,6, 8-14 | C 04 B 40:00 ) |
| A | CHEMICAL ABSTRACTS, vol. 102, no. 22, 3rd June 1985, page 307, abstract no. 189912n, Columbus, Ohio, US; <br> & JP-A-59 207 865 (JAPAN NATIONAL RAILWAYS) 26-11-1984 <br> — — — | 1-6,10,14 | |
| A | WORLD PATENTS INDEX LATEST, week 16, accession no. 91-113415, Derwent Publications Ltd, London, GB; <br> & JP-A-3 054 157 (TAKEDA CHEMICAL INDUSTRIES) <br> — — — | 1,9 | |
| A | US-A-4 210 456 (R.L. MILLER) <br> * Column 4, line 34 - column 6, line 23; claims 1,4 * <br> — — — | 1,11,12, 14 | **TECHNICAL FIELDS SEARCHED (Int. Cl.5)** |
| A | WO-A-8 600 291 (SANDOZ AG) <br> — — — — — | | C 04 B |

The present search report has been drawn up for all claims

| Place of search | Date of completion of search | Examiner |
|---|---|---|
| The Hague | 23 September 91 | THEODORIDOU E. |